# EUROPEAN PATENT SPECIFICATION

(11) **EP 1 756 392 B1**
(45) Date of publication and mention of the grant of the patent: **19.12.2012**
(21) Application number: 05752723.6
(22) Date of filing: 14.06.2005
(51) Int. Cl.: E21B 21/06, B01D 21/00

(54) **A CONTAINER FOR THE COLLECTION OF PARTICLES SEDIMENTED FROM WATER**
BEHÄLTER ZUM SAMMELN VON AUS WASSER SEDIMENTIERTEN PARTIKELN
RESERVOIR POUR LA COLLECTE DE PARTICULES SEDIMENTAIRES FORMEES DANS DE L'EAU

(30) Priority: 14.06.2004 SE 0401529
(43) Date of publication of application: 28.02.2007
(73) Proprietor: Vatten & Energigrossisten i Falkenberg Aktiebolag, 311 23 Falkenberg (SE)
(72) Inventor: JARLOW, Clarence, S-430 10 Tvååker (SE); ROSENQVIST, Kurt, S-311 05 Vinberg (SE)
(74) Representative: Edlund, Fabian
(86) International application number: PCT/SE2005/000903
(87) International publication number: WO 2005/121495

(56) References cited:
- WO-A1-91/14054
- DE-A1- 2 329 684
- US-A- 4 608 157
- US-A- 5 503 747
- US-A1- 2002 148 762

## Description

The present invention relates to a container according to the preamble to appended Claim 1, as disclosed eg in document WO 91/14054 A1.

It is desirable to simplify and improve containers in accordance with the foregoing. This is particularly accentuated in cases of using heat pumps to extract heat from drill holes, since the number of drilled holes has increased considerably in recent years and a further considerable increase is to be expected rather than any reduction in the future. This has created a problem in the management of the water that is employed during the drilling operation and that comes up out of the drill hole together with the earth debris and rock cuttings (chippings) that occur during the drilling operation. This is a particularly severe problem in built-up residential areas where large quantities of debris containing water must be taken care of at extremely high cost. In many municipalities, the local authorities moreover require the specific management of the water, for example transport to special deposit areas, or otherwise the water must be separated from the ground and rock debris before being fed into existing wastewater sewerage systems.

The task forming the basis of the present invention is to realise a device for solving the above-outlined problem structure.

This task is solved according to the present invention in the device intimated by way of introduction in that the container or receptacle device is given the characterising features as set forth in the appended Claims.

The present invention realises an extremely simple device for effective sedimentation of different types of particles from water, and in particular a device which permits a relatively simple and reliable management of the water containing earth and rock debris in, above all, the drilling of holes for geothermal extraction, and possibly water extraction, without any major inconveniences. The debris and the water are collected in the container. The water, that is eventually to be removed from the container has proved to be so pure that it can be very well considered as being as good as sediment-free water which, without inconvenience, may be fed into existing wastewater sewage systems or distributed in the surrounding land. Clay may occur in some earth strata or layers, which entails a discoloration of the water. This may possibly be remedied with the aid of suitable flocculation agents. A major advantage inherent in the device according to the present invention resides in the fact that the transport of water in specific containers or tanks is avoided or eliminated, which entails a considerable reduction of costs for the drilling operation. An extraordinary major advantage in the device according to the present invention resides in the fact that the noise level is reduced considerably in relation to conventional equipment.

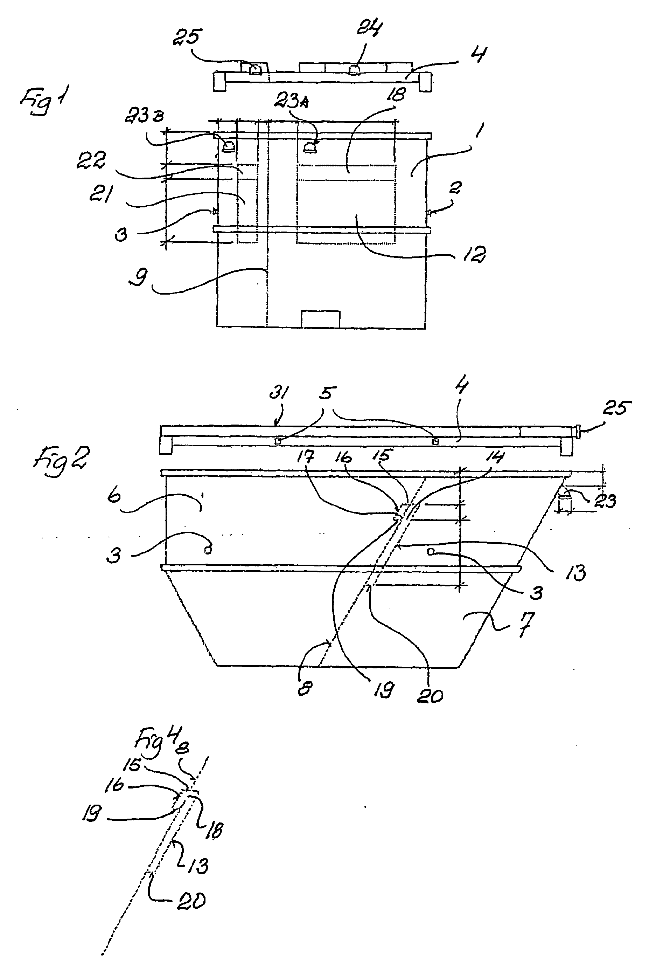

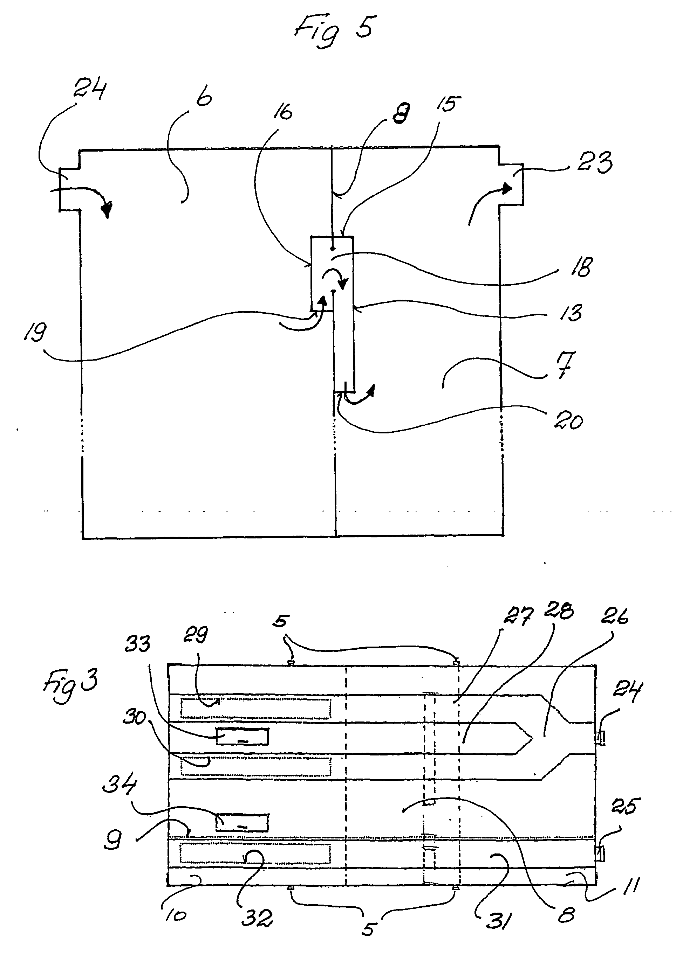

The present invention will be described in greater detail hereinbelow with reference to the accompanying drawings. Fig. 1 shows an end elevation of a device according to one embodiment of the present invention. Fig: 2 is a side elevation of the device illustrated in Fig. 1. Fig. 3 is a top plan view of the device illustrated in Figs. 1 and 2. Fig. 4 is a cross section through a part of the device of Figs. 1-3. Fig. 5 is a schematic cross section through a further embodiment of a device according to the present invention.

The device 1 shown on the drawings according to one embodiment of the present invention will be described hereinbelow in connection with the employment thereof in a container 1 for the reception of drill cuttings and water from the drilling of holes for geothermal or heat pump accumulators. The container 1 has lifting lugs 2 and 3 and may be a per se known conventional container. A lid 4 is intended for the container 1 and is shown a distance above the container and is provided with lifting lugs 5. The lid 4 may rest loosely on the container 1 but may also be fixed thereon.

The container 1 proper is divided into a first chamber 6 and a second chamber 7 by means of a transverse partition wall 8. A longitudinal partition wall 9 divides the chambers 6 and 7 into a third chamber 10 and a fourth chamber 11, in which event the partition wall 8 may extend on both sides of the partition wall 9. This division may possibly be realised by means of a separate substantially identical partition wall which, together with the wall 9, formed the chambers 10 and 11.

The partition wall 8 is provided with a channel 12 which is formed by a plate 13 extending along the partition wall 8 with side plates 14 extending towards the partition wall 8 as well as a top plate 15 which extends into the first chamber 6 and is provided with a front plate 16 and side plates 17. The plates 13, 14, 15, 16 and 17 enclose an opening 18 in the partition wall 8. This implies that the channel has an inlet 19 and an outlet 20. The inlet 19 is obviously located at a considerably higher level in the first chamber 6 than the outlet 20 in the second chamber 7.

The chambers 10 and 11 are separated from one another by means of the partition wall 8 which extends into them and displays an additional channel 21 of in principle the same construction as the channel 12 and is constructed from a number of plates that surround an opening 22 in the partition wall in such a manner that there is formed in the chamber 10 an inlet to the channel 21 at a considerably higher level than the outlet in the fourth chamber 11.

The channels in the partition wall 8 may very well be formed with the aid of pipes that are placed on the partition wall 8 in such a manner that a 180° bend forms the upper part, is extended in the chambers 7 and 11 but lacks an extension in the chambers 6 and 10 so that there is formed an inlet on a higher level in the chambers 6 and 10 than in the chambers 7 and 11. The through flow volume through the channel or pipes may be varied in that there are placed a plurality of pipes beside one another in, for example, the partition wall between the chambers 6 and 7, while there is only a single pipe in the partition wall between the chambers 10 and 11. There may also be provided dampers or throttles in the channels or openings for variation of the through flow.

The chamber 7 is provided upwardly with an outlet 23A, while the chamber 11 is provided with an outlet 23B. The above-mentioned lid 4 which may be placed on the upper side of the container 1 and may possibly be fixed thereon has an inlet 24 for water with rock debris (cuttings) while the lid 4 has an inlet 25 for water with coarse material from the ground above the rock strata.

The inlet 24 leads to a channel 26 which is divided into two branches 27 and 28 which each lead to their opening 29, 30 into the chamber 6. The channel 26 with the branches 27 and 28 may be said to be placed above the bottom plate of the lid 4 proper in which the openings 29 and 30 are provided. The inlet 25 leads to a channel 31 which extends to an opening 32 to the chamber 10. The channel 31 may also be considered as being placed above the bottom plate of the lid 4. In the bottom plate of the lid 4, there are further disposed two inspection hatches 33 and 34 to make for an inspection of the chamber 6 and the chamber 10. The channels 27, 28 and 31 may be provided with lockable hatches in the ends opposite to the inlets 24 and 25. Further, the channels may be placed at such a distance from one another that, after removal or opening of the end hatches of the channels, the lid 4 may be handled with the aid of a fork lift truck or the like.

On drilling, primarily an outlet hose is connected to the inlet 25, water with coarse earth material being collected in the chamber 10, this water entering into the channel 31 and departing therefrom through the opening 32, in which event the water and the coarse debris are allowed to fill the chamber 10. When the water level has reached the inlet 22 to the channel 21, the water will spill over in the chamber 11 and enter therein at a relatively low level. Since it takes quite some time to fill the chamber 10, a large proportion of the coarse debris will sink to the bottom before the water level has reached the inlet to the channel 21, in which event in principle only the surface water will run over into the chamber 11. When the chamber 11 has been filled up over the outlet from the channel 21 therein, the water level will rise and the water will, as it were, lift the water above the outlet, for which reason any possible residual debris in the water will be able to be sedimented in peace and quiet without being disturbed by incoming water.

The water from the drilling in rock including debris (cuttings) therefrom is fed to the inlet 24 via a suitable hose. The water enters into the channel 26 and is divided between channel branches 27 and 28 in order to be fed to the chamber 6 via the openings 29 and 30. The water from the drilling through rock can arrive with exceedingly high turbulence and this speed will be reduced considerably through the division of the water into the two channel branches 27 and 28, for which reason the speed of the water at the openings 29 and 30 will be considerably lower than at the inlet 24. This greatly facilitates the handling of the water. It may also be suitable to provide a division of the channel 26 into more than two channels and/or the provision of different types of baffles in the channel 26 and/or the channel branches 27 and 28.

It can take quite a number of hours to fill the chambers 6 and 7, for which reason considerable sedimentation takes place during the filling time. After filling of the chambers 6 and 7, respectively, up to that level where the inlet to the transition channel is disposed, the water will pass therein and through the opening in the partition wall and to the channel section in the following chamber. After filling of the chambers up over the outlets, the incoming water will, as it were, lift the water above it, for which reason the sedimentation is not disturbed but will continue in a suitable manner. After the filling of the second and fourth chambers, water may be removed therefrom through the outlets 23A and 23B, respectively.

The second chamber 7 is possibly designated the fine chamber and this may be divided into two chambers or more, but trials hitherto have proved that it may very well be sufficient with a division of the chamber 7 or fine chamber into two chambers each with a low placed outlet from the chamber 6. The outlets may be opened and closed in such a manner that water from the chamber 6 can be let into the one fine chamber until it is filled or almost filled, whereafter a switching takes place to the other inlet and the second fine chamber so that sedimentation can take place in the first fine chamber with the water stagnant and without being disturbed by more incoming water. When the second fine chamber is filled, switching takes place to the inlet to the first fine chamber, whereafter the stagnant water therein, whose sediment has sunk to substantially below the outlet level, will be lifted by the incoming water and leave the chamber through an outlet of the same type as the outlet 23A. It should, however, be pointed out that the two fine chambers each have such an outlet.

It is also possible to use the chamber 7 for storage and transport of water to workplaces without access to water and in such an event the chamber 7 is provided with a suitable faucet point.

In one prototype of the device according to the present invention, the inlet 19 is located approximately 650 mm above the outlet 20 and the plate 16 extends approximately 100 mm below the opening 18 in the partition wall 8. In one prototype, the volume of the container 1 was approximately 9 m³, in which event the one chamber constituted 65% and the second chamber 35%, the outlet 23 and the inlet 24 had a diameter of 140 mm and the number of openings 18 in the partition wall 8 was four and had an area corresponding to a hole of a diameter of 140 mm. Further, it is suitable that the distance between the upper edge of the opening 18 and the lower edge of the opening 23 is at least approximately 150 mm. This may also apply to the lower edge of the inlet 24 which may also be located considerably higher up.

In the drawing figures, the partition wall 8 is obliquely inclined in order to facilitate emptying of the chambers in the container 1 of accumulated cuttings and/or other particles. The greatest quantity is sedimented or collected up in the first chamber or the coarse chamber.

The embodiment illustrated in Fig. 5 is generally applicable in sedimentation plants, for example containers or pools in which the partition wall 8 is vertical. This embodiment is usable for sedimentation of in principle any wastewater whatever, for example bdt water and also water containing urine and faeces. This implies that the device according to the present invention may replace so-called triple chamber septic tanks which commonly occur today. The same parts as in the other drawing figures carry the same reference numerals. It should be observed that the inlet 24 is located above the opening 18, like the outlet 23. However, the inlet 24 need not be located on the same level as the outlet 23, but may be located considerably higher up in the chamber 6, with a view to creating space for possible floating particles. The level of the outlet 23 above the opening 18 may be considered as affecting the degree of sedimentation or the period of time during which the water is located in the chamber 7 before the water departs therefrom through the outlet 23. The precondition is naturally the inflow through the inlet 24 and the opening 18.

Many modifications are naturally possible without departing from the scope of the inventive concept as defined in the appended Claims.

## Claims

1. A container for the collection of particles sedimented from water, said container being divided by means of a partition (8) into at least a first chamber (6) which has at least one inlet and a second chamber (7) which has at least one outlet (25),
wherein the partition wall is provided with at least one opening (18) for the transfer of water from the first chamber to the second chamber, and wherein the opening (18) is located at a lower level than the inlet to the first chamber and at a lower level than the outlet (25) from the second chamber, **characterised in that**
each opening (18) is superstructured to form a channel (12) having an inlet opening (19) in the first chamber (6) and an outlet opening (20) in the second chamber (7), wherein the inlet opening (19) is located on a higher level than the outlet opening (20), and wherein said outlet opening (20) is located at a distance from a bottom surface of said container to allow sedimentation of particles in said second chamber (7);
wherein said channel (12) is formed by:
a first screen (15, 16, 17) in the first chamber (6), said first screen being closed above and on the sides and being open below, to form said inlet opening (19) at a lower level than the opening (18) in the partition wall (8), and
a second screen (13, 14, 15) in the second chamber (7), said second screen being closed above and on the sides and being open below to form said outlet opening (20).

2. The device as claimed in claim 1, wherein said partition wall (8) is obliquely inclined, in order to facilitate emptying of the container.

3. The device as claimed in any one of the preceding Claims, **characterised in that** an infeed channel (26) to the first chamber (6) is divided into at least two branches (27,28) which discharge in the first chamber (6).

4. The device as claimed in Claims 3, **characterised in that** an inlet (24) of the infeed channel (26) is located at the one end of the container (1), and that the outlet (29,30) of the infeed channel (26) is located at the other end of the container (1).

5. The device as claimed in any one of the preceding Claims, further comprising a longitudinal partition wall (9) dividing said first and second chambers (6, 7) to form a third and a fourth chamber (10, 11).

6. The device as claimed in Claim 5, **characterised in that** the partition wall (8) between the third chamber (10) and the fourth chamber (11) is provided with an additional opening (22) and has an additional channel (21) with an inlet from the third chamber (10) on a higher level than an outlet into the fourth chamber (11).

7. The device as claimed in any one of the preceding claims, **characterised in that** the container (1) has a second inlet (25) leading to a second channel (31) discharging into the third chamber (10).

8. The device as claimed in one of Claims 6 or 7, **characterised in that** the container (1) has a lid (4) with the inlet channels (26,31) located beside one another and extending from the one end of the container (1) to the other end.

9. The device as claimed in any one of the preceding Claims, further comprising lifting lugs (2, 3).

## Patentansprüche

1. Behälter für die Sammlung von Partikeln, die sich vom Wasser abgesetzt haben, wobei der Behälter durch eine Abtrennung (8) in mindestens eine erste Kammer (6), die mindestens einen Einlass aufweist, und eine zweite Kammer (7), die mindestens einen Auslass (25) aufweist, unterteilt ist,
wobei die Abtrennung mit mindestens einer Öffnung (18) für den Transport von Wasser von der ersten Kammer in die zweite Kammer versehen ist und wobei die Öffnung (18) sich auf einer niedrigeren Ebene als der Einlass in die erste Kammer und auf einer niedrigeren Ebene als der Auslass (25) aus der zweiten Kammer befindet, **dadurch gekennzeichnet, dass**
jede Öffnung (18) so geformt ist, dass sie einen Kanal (12) bildet, der eine Einlassöffnung (19) in der ersten Kammer (6) und eine Auslassöffnung (20) in der zweiten Kammer (7) aufweist, wobei die Einlassöffnung (19) sich auf einer höheren Ebene als die Auslassöffnung (20) befindet und wobei die Auslassöffnung (20) sich in einer Entfernung von einer Bodenfläche des Behälters befindet, um die Absetzung von Partikeln in der zweiten Kammer (7) zu ermöglichen;
wobei der Kanal (12) gebildet ist aus:
einer ersten Trennwand (15, 16, 17) in der ersten Kammer (6), wobei die erste Trennwand oben und an den Seiten geschlossen und unten offen ist, um die Einlassöffnung (19) auf einer niedrigeren Ebene als die Öffnung (18) in der Zwischenwand (8) zu bilden, und
einer zweiten Trennwand (13, 14, 15) in der zweiten Kammer (7), wobei die zweite Trennwand oben und an den Seiten geschlossen und unten offen ist, um die Auslassöffnung (20) zu bilden.

2. Vorrichtung nach Anspruch 1, wobei die Zwischenwand (8) schräg geneigt ist, um das Leeren des Behälters zu erleichtern.

3. Vorrichtung nach einem der vorhergehenden Ansprüche, **dadurch gekennzeichnet, dass** ein Zuführkanal (26) zu der ersten Kammer (6) in mindestens zwei Zweige (27, 28) unterteilt ist, die in die erste Kammer (6) einleiten.

4. Vorrichtung nach Anspruch 3, **dadurch gekennzeichnet, dass** ein Einlass (24) des Zuführkanals (26) sich an einem Ende des Behälters (1) befindet und dass der Auslass (29, 30) des Zuführkanals (26) sich am anderen Ende des Behälters (1) befindet.

5. Vorrichtung nach einem der vorhergehenden Ansprüche, ferner umfassend eine Längszwischenwand (9), die die erste und die zweite Kammer (6, 7) abtrennt, um eine dritte und eine vierte Kammer (10, 11) zu bilden.

6. Vorrichtung nach Anspruch 5, **dadurch gekennzeichnet, dass** die Zwischenwand (8) zwischen der dritten Kammer (10) und der vierten Kammer (11) mit einer zusätzlichen Öffnung (22) versehen ist und einen zusätzlichen Kanal (21) mit einem Einlass aus der dritten Kammer (10) auf einer höheren Ebene als ein Auslass in die vierte Kammer (11) aufweist.

7. Vorrichtung nach einem der vorhergehenden Ansprüche, **dadurch gekennzeichnet, dass** der Behälter (1) einen zweiten Einlass (25) aufweist, der in einen zweiten Kanal (31) führt, welcher in die dritte Kammer (10) einleitet.

8. Vorrichtung nach einem der Ansprüche 6 oder 7, **dadurch gekennzeichnet, dass** der Behälter (1) einen Deckel (4) mit den Einlasskanälen (26, 31) aufweist, die sich nebeneinander befinden und sich von dem einem Ende des Behälters (1) zum anderen Ende erstrecken.

9. Vorrichtung nach einem der vorhergehenden Ansprüche, ferner umfassend Tragzapfen (2, 3).

## Revendications

1. Conteneur pour la collecte de particules sédimentées à partir de l'eau, ledit conteneur étant divisé par un moyen de séparation (8) en au moins une première chambre (6) possédant au moins une entrée, et en une deuxième chambre (7) possédant au moins une sortie (25),
dans lequel la cloison de séparation est pourvue d'au moins une ouverture (18) pour le transfert de l'eau de la première chambre vers la deuxième chambre, et dans lequel l'ouverture (18) est située à un niveau plus bas que l'entrée de la première chambre, et à un niveau plus bas que la sortie (25) de la deuxième chambre, **caractérisé en ce que**
chaque ouverture (18) est superstructurée pour former un canal (12) possédant une ouverture d'entrée (19) dans la première chambre (6), et une ouverture de sortie (20) dans la deuxième chambre (7), dans lequel l'ouverture d'entrée (19) est située à un niveau plus haut que l'ouverture de sortie (20), et dans lequel ladite ouverture de sortie (20) est située à une distance d'une surface de fond dudit conteneur, pour permettre la sédimentation des particules dans ladite deuxième chambre (7) ;
dans lequel ledit canal (12) est formé par :
un premier écran (15, 16, 17) dans la première chambre (6), ledit premier écran étant fermé sur le dessus et sur les côtés et ouvert dessous, pour former ladite ouverture d'entrée (19) à un niveau plus bas que l'ouverture (18) dans la cloison de séparation (8), et
un deuxième écran (13, 14, 15) dans la deuxième chambre (7), ledit deuxième écran étant fermé sur le dessus et sur les côtés et ouvert dessous, pour former ladite ouverture de sortie (20).

2. Dispositif selon la revendication 1, dans lequel la cloison de séparation (8) est inclinée de façon oblique, afin de faciliter la vidange du conteneur.

3. Dispositif selon l'une quelconque des revendications précédentes, **caractérisé en ce qu'**un canal d'alimentation (26) vers la première chambre (6) est divisé en au moins deux branches (27, 28) débouchant dans la première chambre (6).

4. Dispositif selon la revendication 3, **caractérisé en ce qu'**une entrée (24) du canal d'alimentation (26) est située à l'une des extrémités du conteneur (1), et **en ce que** la sortie (29, 30) du canal d'alimentation (26) est située à l'autre extrémité du conteneur (1).

5. Dispositif selon l'une quelconque des revendications précédentes, comprenant en outre une cloison de séparation (9) divisant lesdites première et deuxième chambres (6, 7), pour une troisième et une quatrième chambre (10, 11).

6. Dispositif selon la revendication 5, **caractérisé en ce que** la cloison de séparation (8) entre la troisième chambre (10) et la quatrième chambre (11) est pourvue d'une ouverture supplémentaire (22) et possède un canal supplémentaire (21) avec une entrée depuis la troisième chambre (10), située à un niveau plus élevé qu'une sortie vers la quatrième chambre (11).

7. Dispositif selon l'une quelconque des revendications précédentes, **caractérisé en ce que** le conteneur (1) possède une deuxième entrée (25) menant vers un deuxième canal (31) débouchant dans la troisième chambre (10).

8. Dispositif selon l'une des revendications 6 ou 7, **caractérisé en ce que** le conteneur (1) possède un couvercle (4) avec les canaux d'entrée (26, 31) situés côte à côte et s'étendant d'une extrémité à l'autre du conteneur (1).

9. Dispositif selon l'une quelconque des revendications précédentes, comprenant en outre des pattes de levage (2, 3).
